(19) **Europäisches Patentamt / European Patent Office / Office européen des brevets**

(11) **EP 2 652 674 B1**

(12) ## FASCICULE DE BREVET EUROPEEN

(45) Date de publication et mention de la délivrance du brevet:
**21.01.2015 Bulletin 2015/04**

(21) Numéro de dépôt: **11788868.5**

(22) Date de dépôt: **01.12.2011**

(51) Int Cl.:
*G06K 9/00* *(2006.01)*

(86) Numéro de dépôt international:
**PCT/EP2011/071519**

(87) Numéro de publication internationale:
**WO 2012/079996 (21.06.2012 Gazette 2012/25)**

(54) **PROCEDE DE COMPARAISON D'IMAGES D'IRIS PAR SELECTION INTELLIGENTE DE ZONES TEXTUREES**

VERFAHREN ZUM VERGLEICHEN VON IRISBILDERN DURCH INTELLIGENTE AUSWAHL VON TEXTURIERTEN ZONEN

METHOD OF COMPARING IMAGES OF IRISES BY INTELLIGENT SELECTION OF TEXTURED ZONES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2010 FR 1004942**

(43) Date de publication de la demande:
**23.10.2013 Bulletin 2013/43**

(73) Titulaire: **THALES**
**92200 Neuilly-sur-Seine (FR)**

(72) Inventeurs:
- **CREMER, Sandra**
  **78141 Velizy Cedex (FR)**
- **LEMPERIERE, Nadège**
  **78141 Velizy Cedex (FR)**
- **GARCIA, Sonia**
  **91011 Evry (FR)**
- **DORIZZI, Bernadette**
  **91011 Evry (FR)**

(74) Mandataire: **Delaval, Guillaume Laurent**
**Marks & Clerk France**
**Immeuble Visium**
**22, avenue Aristide Briand**
**94117 Arcueil Cedex (FR)**

(56) Documents cités:
- **FERNANDO ALONSO-FERNANDEZ ET AL: "Iris recognition based on SIFT features", BIOMETRICS, IDENTITY AND SECURITY (BIDS), 2009 INTERNATIONAL CONFERENCE ON, IEEE, PISCATAWAY, NJ, USA, 22 septembre 2009 (2009-09-22), pages 1-8, XP031707236, ISBN: 978-1-4244-5276-7**
- **YI CHEN ET AL: "Localized Iris Image Quality Using 2-D Wavelets", 1 janvier 2005 (2005-01-01), ADVANCES IN BIOMETRICS LECTURE NOTES IN COMPUTER SCIENCE;;LNCS, SPRINGER, BERLIN, DE, PAGE(S) 373 - 381, XP019026902, ISBN: 978-3-540-31111-9 cité dans la demande 3 Localized Quality Assessment**
- **LUIS E GARZA CASTAÑÓN ET AL: "An Application of Random and Hammersley Sampling Methods to Iris Recognition", 1 janvier 2006 (2006-01-01), ADVANCES IN APPLIED ARTIFICIAL INTELLIGENCE LECTURE NOTES IN COMPUTER SCIENCE;LECTURE NOTES IN ARTIFICIAL INTELLIG ENCE;LNCS, SPRINGER, BERLIN, DE, PAGE(S) 520 - 529, XP019035171, ISBN: 978-3-540-35453-6 figure 2**
- **WEN YANG ET AL: "Iris Recognition Based on Location of Key Points", 15 juillet 2004 (2004-07-15), BIOMETRIC AUTHENTICATION; [LECTURE NOTES IN COMPUTER SCIENCE;; LNCS], SPRINGER-VERLAG, BERLIN/ HEIDELBERG, PAGE(S) 484 - 490, XP019007777, ISBN: 978-3-540-22146-3 figure 3**

- **EMINE KRICHEN ET AL: "A new probabilistic Iris Quality Measure for comprehensive noise detection", BIOMETRICS: THEORY, APPLICATIONS, AND SYSTEMS, 2007. BTAS 2007. FIRST IEEE INTERNATIONAL CONFERENCE ON, IEEE, PI, 1 septembre 2007 (2007-09-01), pages 1-6, XP031189936, ISBN: 978-1-4244-1596-0 cité dans la demande**

**Description**

L'invention concerne un procédé de comparaison d'iris par sélection intelligente de zones texturées et s'applique notamment au domaine de la biométrie et plus particulièrement de la comparaison d'iris humains.

Les techniques de biométrie ont pour objectifs la détection et la reconnaissance d'êtres vivants. Ces techniques peuvent être utilisées dans le cadre d'applications requérant un certain niveau de sécurité, comme par exemple le contrôle d'accès à des sites sensibles.

Pour cela, une analyse morphologique appliquées aux individus est mise en oeuvre dans le but d'identifier les caractéristiques physiques leurs étant propres. Cette analyse s'appuie par exemple sur l'iris ou les empreintes digitales.

Pour ce qui est de l'analyse de l'iris, un exemple de méthode d'analyse existante est la méthode dite de Daugman, décrite dans le brevet US5291560. Cette méthode permet la comparaison entre plusieurs échantillons numériques représentatifs d'iris et de déterminer ensuite si ces échantillons correspondent à un même individu. Pour cela, une première étape a pour objectif de segmenter et de normaliser les iris puis une étape vise à en extraire un code binaire. L'extraction du code binaire est réalisée en appliquant une démodulation de phase autour de points d'application pour transformer la texture de l'iris en un code binaire. La comparaison de deux iris est donc ramenée à une comparaison point par point de plusieurs codes binaires, où les points des codes binaires étaient directement associés à des points d'application placés sur l'iris normalisé.

Le positionnement des points d'application sur l'image normalisée de l'iris peut être réalisé de manière différente. La méthode Daugman telle que décrite dans le brevet US5291560 propose de positionner les points d'application dans les quadrants gauches et droit de l'iris. Ce positionnement a pour objectif d'exclure les régions de l'iris dans lesquelles la probabilité de contenir des artefacts est importante. En effet, certaines régions peuvent contenir des cils, des paupières ou des spots lumineux. En excluant ces régions, on évite ainsi d'inclure de l'information bruitée dans le code binaire et ainsi de fausser leur comparaison. L'inconvénient de cette approche est que les positions des points d'application sont prédéfinies et identiques pour toutes les images d'iris. Elle ne permet donc pas de s'adapter aux spécificités de chaque iris.

Pour répondre à ce problème, L. Masek a proposé dans sa thèse intitulée « Recognition of Human Iris Patterns for Biometric Identification », 2003, d'introduire un masque de segmentation sur l'iris normalisé. Ce masque est calculé automatiquement pour chaque iris par une méthode de contours actifs. Le but de ce masque est de couvrir les artefacts présents dans l'iris. Les points d'application pris en compte pour la comparaison des iris sont ensuite placés dans les régions non masquées. Cependant, cette technique a des limites car elle est binaire et traite uniformément toutes les régions non masquées. Ainsi, les régions très texturées ou peu texturées ainsi que les régions contenant des artefacts non masqués ou n'en contenant pas sont traités de la même manière. Dans la suite de la description, on désigne par les mots « région » ou « zone » une portion d'image d'iris normalisée.

Il a été ensuite proposé de mesurer localement la qualité dans différentes régions de l'iris et d'utiliser une pondération par ces mesures de qualité au moment de la comparaison ces codes binaires des iris. Dans cette description, une mesure de qualité correspond par exemple à une estimation du niveau de texture d'une région de l'iris données et de sa ressemblance à une texture d'iris. C'est ce qui est présenté dans l'article de Y. Chen et al. intitulé Localized Iris Image Quality Using 2-D Wavelets, proceeding of international conference on biometrics, Hong-Kong, Chine, 2006. La mesure de qualité est également explicitée dans l'article de E. Krichen, S. Garcia-Salicetti et B. Dorizzi intitulé A new probalistic Iris Quality Measure for comprehensive noise detection, IEEE First International Conference on Biometrics : Theory, Applications and Systems, Washington USA, Septembre 2007.

L'article de F. Alonso-Fernandez et al. intitulé Iris recognition based on SIFTfeatures (IEEE INTERNATIONAL CONFERENCE ON BIOMETRICS, IDENTITY AND SECURITY (BIDS), 22 septembre 2009) décrit un procédé pour la comparaison d'images d'iris par comparaison de descripteurs SIFT. Cet article mentionne également l'utilisation d'une mesure de qualité associée à ces descripteurs.

L'article de L.E. Garza Castanon et al. intitulé An Application of Random and Hammersley Sampling Methods to Iris Recognition (in ADVANCES IN APPLIED ARTIFICIAL INTELLIGENCE, publié par SPRINGER, BERLIN, janvier 2006) décrit une stratégie d'échantillonnage pour extraire des points caractéristiques dans des images d'iris en coordonnées log-polaire.

L'article de W. Yang et al. intitulé Iris Recognition Based on Location of Key Points (in LECTURE NOTES IN COMPUTER SCIENCE, BIOMETRIC AUTHENTICATION publié par SPRINGER-VERLAG, BERLIN/HEIDELBERG, Juillet 2004) décrit un procédé d'extraction de points caractéristiques dans des images d'iris en coordonnées log-polaire avec des filtres de Gabor.

Les approches précitées présentent cependant des inconvénients. Par exemple, la mesure de qualité présenté dans l'article de Y. Chen et al. ne permet pas de traiter les artefacts, contrairement à celle de Krichen. Pour ce qui est de la mesure de qualité de l'article de E. Krichen et al., celle-ci n'est pas robuste lorsqu'elle est utilisée pour mettre en oeuvre une pondération lors de la comparaison de codes binaires et ce, par exemple, lorsque les régions de l'iris sont de très mauvaise qualité, notamment lorsque celle-ci sont peu texturées. En effet, cette mesure de qualité peut attribuer de très faibles valeurs de qualité à des régions de l'iris si celles-ci sont peu texturées. Or certains iris comportent intrinsèquement une proportion importante de régions peu texturées. Pondérer ces régions par de faibles scores de qualité revient à réduire la quantité d'information dont on dispose pour la comparaison, ce qui biaise le résultat de ladite comparaison.

Remarque : à l'inverse, la méthode que nous proposons impose de prendre en compte N points pour la comparaison même pour les iris peu texturés, ce qui empêche d'avoir des résultats de comparaison biaisé.

D'autres techniques de reconnaissance d'iris ne s'appuyant pas sur le système de Daugman existent également. C'est par exemple le cas du système basé sur la corrélation décrit dans le brevet EP 08788209. Même si cette dernière solution est plus robuste aux images d'iris dégradées que le système de Daugman, elle est bien plus complexe et coûteuse en temps de calcul.

Un but de l'invention est notamment de pallier les inconvénients précités.

A cet effet l'invention a pour objet un procédé de comparaison d'au moins deux images d'iris comportant une étape déterminant M mesures $q_{i,j}^{(1)}$ représentatives du niveau de qualité associé à M régions composant la première image, lesdites régions étant centrées sur M points de mesure, une étape déterminant M mesures $q_{i,j}^{(2)}$ représentatives du niveau de qualité associé à M régions composant la seconde image. Lesdites mesures sont centrées sur M points de mesure, les M mesures de la seconde image correspondant aux M mesures de la première image de par le fait que les M points de mesure de la seconde image correspondent aux M points de mesure de la première image. Le procédé comporte une étape de fusion des mesures de $q_{i,j}^{(f)}$ ualité $q_{i,j}^{(1)}$, $\overline{q_{i,j}^{(2)}}$, M mesures fusionnées $q_{i,j}^{(f)}$ étant obtenues par combinaison de deux mesures correspondantes appartenant aux deux images. Le procédé comporte aussi une étape de sélection des N régions présentant les N niveaux de qualité les plus élevés. Le procédé comporte aussi une étape d'encodage des deux images en utilisant les N régions sélectionnées de manière à obtenir un code binaire pour chaque image. En outre, le procédé comporte une étape de comparaison des deux codes binaires de manière à quantifier le niveau de similarité entre les deux images.

Selon un aspect de l'invention, les deux images sont segmentées et normalisées.

Selon un autre aspect de l'invention, les points de mesure sont répartis uniformément sur les images d'iris.

Dans un mode de réalisation de l'invention, une mesure fusionnée $q_{i,j}^{(f)}$ associée à une région donnée est déterminée en sélectionnant l'une des valeurs mesurées $q_{i,j}^{(1)}$, $q_{i,j}^{(2)}$ associée à cette même région, la valeur correspondant au niveau de qualité le plus faible étant choisie.

Alternativement, une mesure fusionnée $q_{i,j}^{(f)}$ associée à une région donnée est déterminée par pondération des mesures des deux images $q_{i,j}^{(1)}$ et $q_{i,j}^{(2)}$ correspondant à cette région.

Alternativement, une mesure fusionnée $q_{i,j}^{(f)}$ associée à une région donnée est déterminée en utilisant l'expression suivante : $q_{i,j}^{(f)} = \sqrt{q_{i,j}^{(1)} \times q_{i,j}^{(2)}}$ .

Selon un aspect de l'invention, les mesures de qualité $q_{i,j}^{(1)}$ sont mémorisées dans une matrice Q1, les mesures de qualité $q_{i,j}^{(2)}$ sont mémorisées dans une matrice Q2 et les mesures fusionnées $q_{i,j}^{(f)}$ sont mémorisées dans une matrice Qf.

Les codes binaires sont obtenus, par exemple, en appliquant une démodulation de phase autour de N points d'application correspondant au centre des N régions sélectionnées.

Dans un mode de réalisation, l'étape de comparaison détermine un score de similarité correspondant à la distance de Hamming entre les deux codes binaires.

Le résultat d'une mesure est, par exemple, un nombre réel compris entre 0 et 1, la valeur 1 étant atteinte pour une qualité maximale de la région mesurée.

Selon un aspect de l'invention, les étapes de fusion, de sélection, et d'encodage sont appliquées pour plusieurs versions translatées des images d'iris normalisées.

L'invention a notamment comme avantage de permettre de ne pas utiliser de masque pour cacher les zones des images d'iris de mauvaise qualité. Elle a aussi pour avantage de présenter de bonnes performances de comparaison en présence d'iris naturellement peu texturés.

D'autres caractéristiques et avantages de l'invention apparaîtront à l'aide de la description qui suit donnée à titre illustratif et non limitatif, faite en regard des dessins annexés parmi lesquels :

- la figure 1 représente un oeil ainsi que la zone habituellement utilisée pour la comparaison d'iris ;
- la figure 2 donne un exemple d'image d'iris normalisée ;
- la figure 3 présente un diagramme illustrant le fonctionnement de la méthode Daugman de comparaison d'iris ;
- la figure 4 illustre le principe de fusion de mesures de qualité ;
- la figure 5 donne un exemple de mise en oeuvre du procédé selon l'invention.

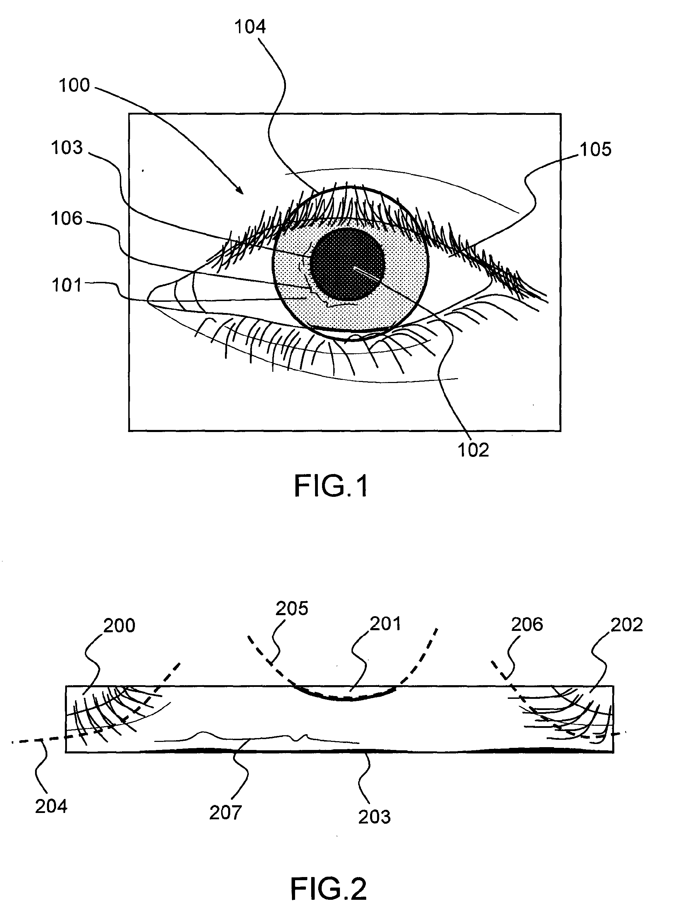

La figure 1 montre un oeil ainsi que la zone habituellement utilisée pour la comparaison d'iris. Sur l'oeil 100 donné en exemple, on distingue l'iris 101 et la pupille 102. Un zone définie par la surface entre deux cercles 103, 104 comprenant la partie visible de l'iris permet de segmenter l'iris, c'est-à-dire de l'isoler du blanc de l'oeil 105 et de la pupille 102. Un iris comprend des zones texturées de manière différente. Ainsi, dans l'exemple de la figure 1, la zone 106 est très texturée, cela étant représenté par des traits noirs.

La figure 2 donne un exemple d'image normalisée d'iris. Une image d'iris normalisée correspond à l'image numérique d'un iris déroulée puis ramenée à un format standard, par exemple un format comportant 64 par 512 pixels.

Comme explicité précédemment, des régions 200, 201, 202 contiennent des artéfacts, par exemple des cils et des portions de paupières, qui s'ajoutent à la zone utile 203 pour la comparaison. Dans cette zone apparait une zone très texturée représentée par un trait 207. L'image normalisée d'iris peut être associée à un masque permettant de séparer 204, 205, 206 la zone utile 203 des zones contenant des artefacts 200, 201, 202.

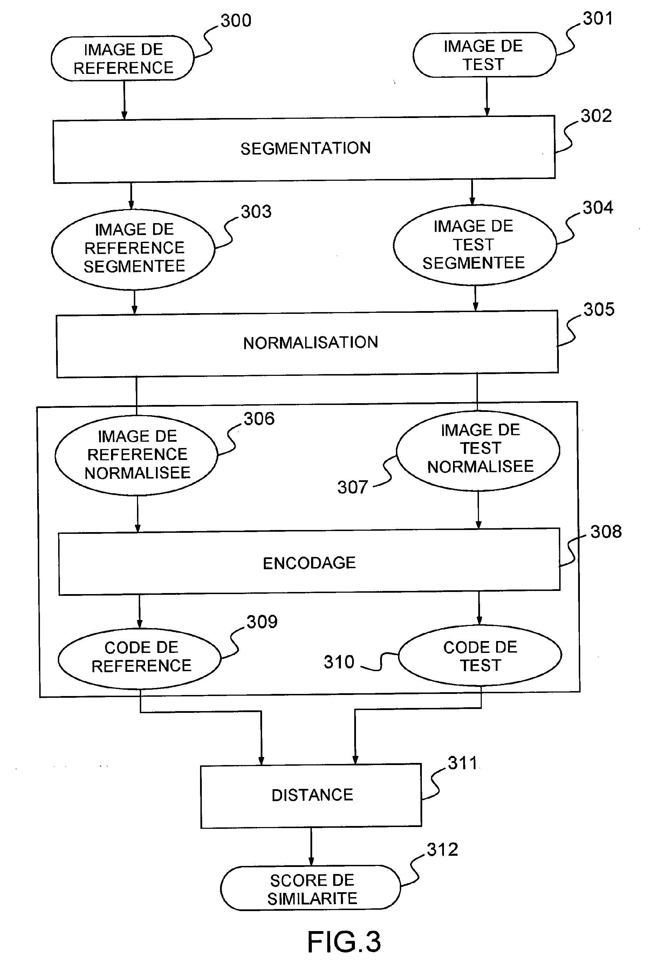

La figure 3 donne un diagramme illustrant le fonctionnement de la méthode Daugman de comparaison d'iris.

Cette méthode a pour objectif de déterminer si deux images d'iris appartiennent à la même personne. Ainsi, une image d'iris de test 301 est comparée à une image d'iris de référence 300. Une première étape a pour but de segmenter 302 les iris de ces deux images, c'est-à-dire d'isoler chaque iris du blanc de l'oeil et de la pupille.

Durant cette étape et de manière optionnelle, un masque de segmentation propre à chaque image segmentée peut être déterminé.

Les images de référence et de test après segmentation 303, 304 sont ensuite normalisées 305.

Il est connu de l'état de la technique qu'après la normalisation 305, différentes translations peuvent être appliquées à l'image d'iris de test. Les étapes décrites ci-après d'encodage 308 et de comparaison 312 sont ensuite appliquées à chaque image translatée, le meilleur score de similarité étant retenu. Le but de ces translations est d'ajuster l'image test par rapport à l'image de référence. Cependant, par souci de simplification de l'exposé sans que cela limite la portée de l'invention, une seule version non translatée de l'image de test est considérée dans la suite de la description.

Une étape d'encodage 308 permet d'obtenir un code de référence 309 pour l'image de référence et un code de test 310 pour l'image de test.

Ces codes sont ensuite comparés en calculant, par exemple, leur distance de Hamming 311. Le résultat de cette comparaison est appelé score de similarité 312 et permet de décider si l'iris de test correspond à l'iris de référence, la correspondance étant établie si le score de similarité dépasse une valeur prédéterminée.

La méthode de comparaison d'iris de Daugman peut être améliorée en utilisant des mesures de qualité localisées dans l'image d'iris normalisée. Ces mesures de qualité sont alors utilisées pour sélectionner automatiquement pour chaque couple d'iris la position des points d'application. Cette sélection automatique est réalisée de manière à ce que les points d'application choisis appartiennent à des régions qui ne comportent pas d'artefacts. En outre, les régions les plus riches en texture sont privilégiées.

Pour mener à bien cette sélection, la qualité est évaluée localement sur un nombre choisi de points. Ces points sont, par exemple, distribués uniformément sur l'ensemble de l'image d'iris normalisée. Les N points présentant la meilleure qualité sont ensuite retenus comme points d'applications pour la démodulation de phase.

Ce procédé est une amélioration de la méthode Daugman, ce qui lui permet d'être simple à mettre en oeuvre et lui permet, de par sa simplicité, d'être exécuté rapidement. Avantageusement, le procédé selon l'invention ajuste automatiquement la position des points d'application à chaque iris. Cette adaptation automatique permet d'éviter la prise en compte des régions contenant des artefacts et favorise les régions les plus texturées. De plus, le procédé est robuste dans les cas où l'ensemble de l'image d'iris est de mauvaise qualité.

Le procédé de comparaison d'iris selon l'invention reprend les étapes principales de la méthode de Daugman comme présentées à l'aide de la figure 3. Les améliorations interviennent avant entre l'étape de normalisation et l'étape d'encodage des images d'iris. Ainsi, après normalisation des images de référence et de test, une succession d'étapes permettent de préparer l'encodage pour que les codes de référence et de test obtenus permettent une détection de haute performance, c'est-à-dire avec une probabilité de détection correcte élevée.

Le procédé selon l'invention s'appuie sur des mesures de qualité effectuées sur les images normalisées de référence et de test. Un premier ensemble de mesures de qualité est associé à l'image de référence normalisée et un second ensemble de mesures de qualité est associé à l'image de test normalisée. Cette mesure est obtenue, par exemple, en comparant une région de l'image normalisée d'iris aux échantillons d'une base de données d'images texturées. La région mesurée est, par exemple, centrée sur un point de mesure. Une telle méthode est décrite dans l'article de E. Krichen, S. Garcia-Salicetti et B. Dorizzi précédemment cité. Le résultat d'une mesure est par exemple un nombre réel compris entre 0 et 1, la valeur 1 étant atteinte pour une qualité maximale.

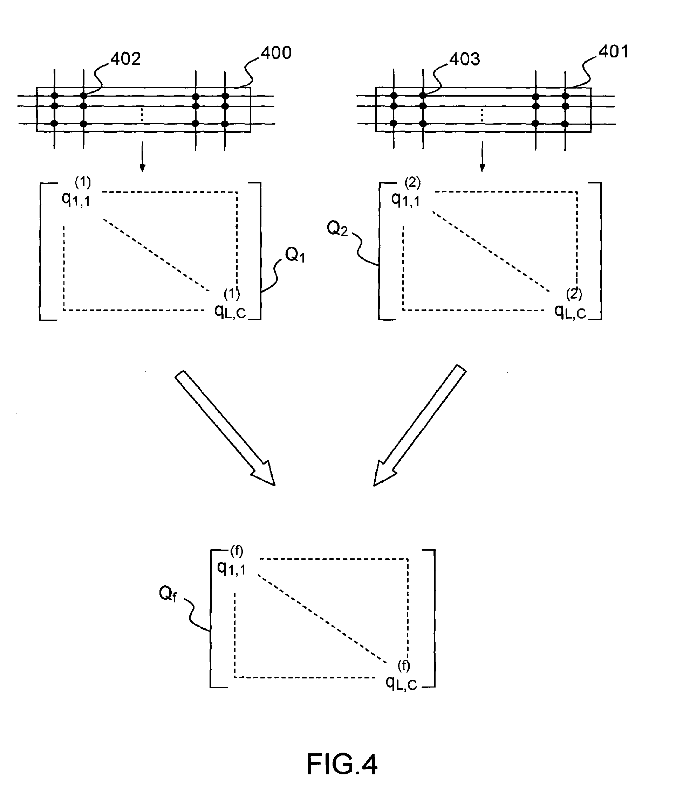

La figure 4 illustre le principe de fusion de mesures de qualité. Les mesures effectuées sur une image normalisée peuvent être réalisées sur M points 402, 403 répartis sur l'intégralité de l'image normalisée de référence 400 et sur l'image normalisée de test 401. Cette répartition est par exemple uniforme.

Les mesures associées à l'image normalisée de référence sont, par exemple, mémorisées dans une matrice Q1 composée de M éléments $q_{i,j}^{(1)}$ et les mesures associées à l'image normalisée de test dans une matrice Q2 composée de M éléments $q_{i,j}^{(2)}$. Ces matrices comportent L lignes et C colonnes de manière à ce que M = LxC. On a alors $i \in [1, L]$ et $j \in [1,C]$.

Les mesures associées à ces deux images sont ensuite fusionnées. L'objectif de cette fusion est de déterminer les zones sur lesquelles une détection fiable peut être réalisée. Le résultat de cette fusion conduit à une matrice de fusion Qf, les éléments $q_{i,j}^{(f)}$ de cette matrice résultant des éléments des matrices Q1 et Q2.

Les éléments $q_{i,j}^{(f)}$ de la matrice de fusion Qf peuvent être déterminés de différentes manières, par exemple en utilisant l'expression suivante :

$$q_{i,j}^{(f)} = \min\left(q_{i,j}^{(1)}, q_{i,j}^{(2)}\right) \qquad (1)$$

dans laquelle la fonction min(a, b) a pour résultat a ou b, le nombre le plus petit étant choisi.

Alternativement, les éléments $q_{i,j}^{(f)}$ peuvent être choisis par pondération des éléments correspondant $q_{i,j}^{(1)}$ et $q_{i,j}^{(2)}$ des matrices Q1 et Q2.

Une troisième possibilité est d'utiliser l'expression suivante :

$$q_{i,j}^{(f)} = \sqrt{q_{i,j}^{(1)} \times q_{i,j}^{(2)}} \qquad (2)$$

Ces trois possibilités de fusion sont données à titre d'exemple. D'autres méthodes pour déterminer les valeurs fusionnées $q_{i,j}^{(f)}$ peuvent également être choisies pour la mise en oeuvre de l'invention.

Les valeurs fusionnées $q_{i,j}^{(f)}$ sont ensuite utilisées pour sélectionner les zones texturées les plus pertinentes pour la comparaison d'iris.

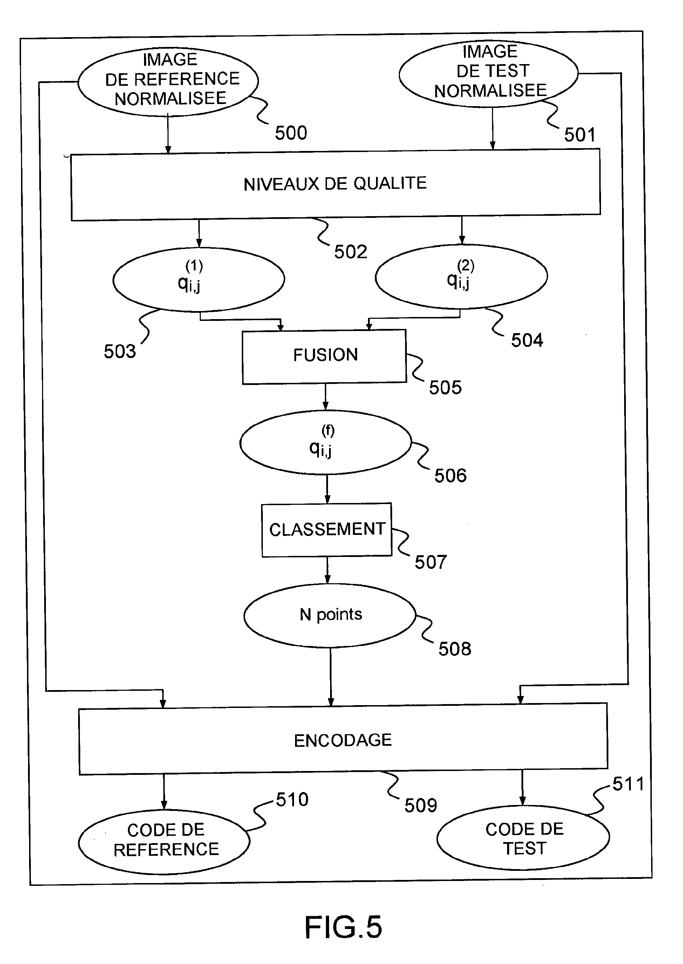

La figure 5 donne un exemple de mise en oeuvre du procédé selon l'invention. Les images d'iris utilisées comme images de référence et images de test sont segmentées et normalisées. Les opérations de segmentation et de normalisation peuvent être appliquées au même moment aux images de références et de test ou bien à des moments différents. Suite à ces opérations, le procédé selon l'invention comprend des étapes permettant de sélectionner les zones texturées les plus pertinentes pour la comparaison d'iris.

Pour chaque image normalisée de l'iris on considère M points répartis sur chaque image. Ces M points sont répartis par exemple uniformément suivant une grille dite grille de comparaison. M mesures de qualité $q_{i,j}^{(1)}$ sont déterminées 502 pour l'image normalisée de référence 500. M mesures $q_{i,j}^{(2)}$ de qualité 504 sont aussi déterminées pour l'image normalisée de test 501. Pour cela, on associe une mesure de qualité à chacun des M points d'une image en appliquant un modèle à apprentissage statistique à une imagette centrée autour de ce point. Comme indiqué précédemment, cette mesure peut être comprise entre 0 et 1 et vaudra 1 pour une imagette de qualité idéale. Sa valeur diminuera si l'imagette est peu texturée ou si elle comporte des artefacts comme des occlusions par des paupières, des cils ou des spots lumineux. Les mesures $q_{i,j}^{(1)}$ 503 et $q_{i,j}^{(2)}$ 504 sont représentatives d'un niveau de qualité dans une zone donnée de l'image mesurée. Comme explicité précédemment, ces mesures sont mémorisées, par exemple, dans une matrice Q1 celles associées à l'image normalisée de référence et dans une matrice Q2 pour celles associées à l'image normalisée de test.

Les mesures $q_{i,j}^{(1)}$ 503 et $q_{i,j}^{(2)}$ 504 sont ensuite fusionnées 505. On dispose de deux mesures de qualité $q_{i,j}^{(1)}$ et $q_{i,j}^{(2)}$ pour chacun des M points de la grille de comparaison de l'iris. Ces deux valeurs sont fusionnées, par exemple en conservant leur valeur minimale. De cette façon une unique valeur $q_{i,j}^{(f)}$ est associée à un point de la grille de comparaison pour le couple d'iris considéré.

Les valeurs obtenues $q_{i,j}^{(f)}$ sont, par exemple, mémorisées dans une matrice de fusion Qf.

Les zones texturées composant l'image sont ensuite classées sur la base des mesures fusionnées $q_{i,j}^{(f)}$.

Par exemple, N point d'application sont sélectionnés parmi les M points mesurés et classés 507. Ces N points correspondent aux points de la grille de comparaison présentant les valeurs de mesures les valeurs de mesures de qualité fusionnées les plus élevées. Elles sont classées en fonction de leur niveau de qualité, par exemple du niveau le plus bas au niveau le plus élevé.

En d'autres termes, on a associé pour chaque couple d'iris, une mesure de qualité locale à chacun des M points de la grille de comparaison, lesdits points étant par exemple répartis uniformément sur l'intégralité de l'image. On choisit ensuite d'utiliser parmi ces M points, les N points de meilleure qualité comme points d'application utilisés dans la transformation de chaque iris en code binaire.

Le choix de la valeur de N peut être optimisé de manière à ce que le nombre de points d'application permette de conserver suffisamment de degrés de libertés dans le code de l'iris et que les zones de mauvaise qualité ne soient pas prises en compte dans le calcul du score de similarité.

Les images normalisées 509 sont ensuite encodées. Un code de référence 510 et un code de test 511 sont ainsi générés. Ils sont utilisés ensuite pour comparer les images et calculer le score de similarité. Pour cela, les codes 510, 511 sont comparés en calculant, par exemple, leur distance de Hamming. Le résultat de cette comparaison, c'est-à-dire le score de similarité, permet de décider si l'iris de test correspond à l'iris de référence, par exemple par comparaison dudit score à une valeur prédéterminée.

**Revendications**

1. Procédé de comparaison d'au moins deux images d'iris comportant une étape déterminant M mesures $q_{i,j}^{(1)}$ représentatives du niveau de qualité associé à M régions composant la première image, lesdites régions étant centrées sur M points de mesure, une étape déterminant M mesures $q_{i,j}^{(2)}$ représentatives du niveau de qualité associé à M régions composant la seconde image, lesdites mesures étant centrées sur M points de mesure, les M mesures de la seconde image correspondant aux M mesures de la première image de par le fait que les M points de mesure de la seconde image correspondent aux M points de mesure de la première image, ledit procédé étant **caractérisé en ce qu'**il comporte :

   - une étape de fusion (505) des mesures de qualité $q_{i,j}^{(1)}$, $q_{i,j}^{(2)}$, M mesures fusionnées $q_{i,j}^{(f)}$ (506) étant obtenues par combinaison de deux mesures correspondantes appartenant aux deux images ;
   - une étape de sélection (507) des N régions (508) présentant les N niveaux de qualité les plus élevés ;
   - une étape (509) d'encodage des deux images en utilisant les N régions sélectionnées de manière à obtenir un code binaire (510, 511) pour chaque image ;
   - une étape de comparaison (311) des deux codes binaires (309, 310) de manière à quantifier le niveau (312) de similarité entre les deux images.

2. Procédé selon la revendication 1 **caractérisé en ce que** les deux images (500, 501) sont segmentées et normalisées.

3.  Procédé selon l'une quelconque des revendications précédentes **caractérisé en ce que** les points de mesure (402, 403) sont répartis uniformément sur les images d'iris.

4.  Procédé selon l'une quelconque des revendications précédentes **caractérisé en ce qu'**une mesure fusionnée $q_{i,j}^{(f)}$ associée à une région donnée est déterminée en sélectionnant l'une des valeurs mesurées $q_{i,j}^{(1)}$, $q_{i,j}^{(2)}$ associée à cette même région, la valeur correspondant au niveau de qualité le plus faible étant choisie.

5.  Procédé selon l'une quelconque des revendications 1 à 3 **caractérisé en ce qu'**une mesure fusionnée $q_{i,j}^{(f)}$ associée à une région donnée est déterminée par pondération des mesures des deux images $q_{i,j}^{(1)}$ et $q_{i,j}^{(2)}$ correspondant à cette région.

6.  Procédé selon l'une quelconque des revendications 1 à 3 **caractérisé en ce qu'**une mesure fusionnée $q_{i,j}^{(f)}$ associée à une région donnée est déterminée en utilisant l'expression suivante : $q_{i,j}^{(f)} = \sqrt{q_{i,j}^{(1)} \times q_{i,j}^{(2)}}$

7.  Procédé selon l'une quelconque des revendications précédentes **caractérisé en ce que** les mesures de qualité sont mémorisées dans une matrice Q1, les mesures de qualité $q_{i,j}^{(2)}$ sont mémorisées dans une matrice Q2 et les mesures fusionnées $q_{i,j}^{(f)}$ sont mémorisées dans une matrice Qf.

8.  Procédé selon l'une quelconque des revendications précédentes **caractérisé en ce que** les codes binaires sont obtenus en appliquant une démodulation de phase autour de N points d'application correspondant au centre des N régions sélectionnées.

9.  Procédé selon l'une quelconque des revendications précédentes **caractérisé en ce que** l'étape de comparaison (311) détermine un score de similarité (312) correspondant à la distance de Hamming entre les deux codes binaires (309, 310).

10.  Procédé selon l'une quelconque des revendications précédentes **caractérisé en ce que** le résultat d'une mesure est un nombre réel compris entre 0 et 1, la valeur 1 étant atteinte pour une qualité maximale de la région mesurée.

11.  Procédé selon l'une quelconque des revendications 2 à 10 **caractérisé en ce que** les étapes de fusion (505), de sélection (507), et d'encodage (509) sont appliquées pour plusieurs versions translatées des images d'iris normalisées.


**Patentansprüche**

1.  Verfahren zum Vergleichen von mindestens zwei Irisbildern, das einen Schritt, der M repräsentative Messungen $q_{\overline{i,j}}^{(1)}$ des M Regionen zugeordneten Qualitätsniveaus, die das erste Bild bilden, wobei die Regionen auf M Messpunkte zentriert sind, einen Schritt, der M repräsentative Messungen $q_{\overline{i,j}}^{(\tilde{2})}$ des M Regionen zugeordneten Qualitätsniveaus, die das zweite Bild bilden, wobei die Messungen auf M Messpunkte zentriert sind, aufweist, wobei die M Messungen des zweiten Bilds mit den M Messungen des ersten Bilds dadurch korrespondieren, dass die M Messpunkte des zweiten Bilds mit den M Messpunkten des ersten Bilds korrespondieren, wobei das Verfahren **dadurch gekennzeichnet ist, dass** es aufweist:

    - einen Schritt des Zusammenführens (505) der Qualitätsmessungen $q_{\overline{i,j}}^{(1)}$, $q_{\overline{i,j}}^{(2)}$, wobei M zusammenge-

führte Messungen $q\frac{(f)}{i,j}$ (506) durch Kombination von zwei korrespondierenden Messungen erhalten werden, die zu den zwei Bildern gehören;
- einen Auswahlsschritt (507) der N Regionen (508), die die N höchsten Qualitätsniveaus aufweisen,
- einen Codierschritt (509) der zwei Bilder durch derartige Verwendung der N ausgewählten Regionen, dass für jedes Bild ein binärer Code (510, 511) erzeugt wird,
- einen Vergleichsschritt (311) der zwei binären Codes (309, 310) derart, dass das Ähnlichkeitsniveau (312) zwischen den zwei Bildern quantifiziert wird.

2. Verfahren nach Anspruch 1, **dadurch gekennzeichnet, dass** die zwei Bilder (500, 501) segmentiert und normiert werden.

3. Verfahren nach einem der vorangehenden Ansprüche, **dadurch gekennzeichnet, dass** die Messpunkte (402, 403) gleichmäßig über die Irisbilder verteilt sind.

4. Verfahren nach einem der vorangehenden Ansprüche, **dadurch gekennzeichnet, dass** eine zusammengeführte Messung $q\frac{(f)}{i,j}$, die einer bestimmten Region zugeordnet ist, durch Auswahl eines der Messwerte $q\frac{(1)}{i,j}'', q\frac{(2)}{i,j}$, der dieser selben Region zugeordnet ist, bestimmt wird, wobei der Wert ausgewählt wird, der dem niedrigsten Qualitätsniveau entspricht.

5. Verfahren nach einem der Ansprüche 1 bis 3, **dadurch gekennzeichnet, dass** eine zusammengeführte Messung $q\frac{(f)}{i,j}$, die einer bestimmten Region zugeordnet ist, durch Wichtung der Messungen der zwei Bilder $q\frac{(1)}{i,j}$ und $q\frac{(2)}{i,j}$, die dieser Region entsprechen, bestimmt wird.

6. Verfahren nach einem der Ansprüche 1 bis 3, **dadurch gekennzeichnet, dass** eine zusammengeführte Messung $q\frac{(f)}{i,j}$, die einer bestimmten Region zugeordnet ist, durch Verwendung der folgenden Formel

$$q\frac{(f)}{i,j} = \sqrt{q\frac{(1)}{i,j} \text{ x } q\frac{(2)}{i,j}}$$ bestimmt wird.

7. Verfahren nach einem der vorangehenden Ansprüche, **dadurch gekennzeichnet, dass** die Qualitätsmessungen $q\frac{(1)}{i,j}$ in einer Matrix Q1 gespeichert werden, die Qualitätsmessungen $q\frac{(2)}{i,j}$ in einer Matrix Q2 gespeichert werden und die zusammengeführten Messungen $q\frac{(f)}{i,j}$ in einer Matrix Qf gespeichert werden.

8. Verfahren nach einem der vorangehenden Ansprüche, **dadurch gekennzeichnet, dass** die binären Codes durch Anwenden einer Phasendemodulierung um N Anwendungspunkte, die dem Zentrum der N ausgewählten Regionen entsprechen, erzeugt werden.

9. Verfahren nach einem der vorangehenden Ansprüche, **dadurch gekennzeichnet, dass** der Vergleichsschritt (311) einen Ähnlichkeitswert (312) bestimmt, der der Hammingdistanz zwischen den zwei binären Codes (309, 310) entspricht.

10. Verfahren nach einem der vorangehenden Ansprüche, **dadurch gekennzeichnet, dass** das Ergebnis einer Messung eine reelle Zahl zwischen 0 und 1 ist, wobei für eine maximale Qualität der gemessenen Region der Wert 1 erreicht wird.

11. Verfahren nach einem der Ansprüche 2 bis 10, **dadurch gekennzeichnet, dass** der Schritt des Zusammenführens (505), der Auswahlschritt (507) und der Codierschritt (509) auf mehrere versetzte Versionen der normierten Irisbilder angewendet werden.

**Claims**

1. Method for comparing at least two iris images comprising a step determining M measurements $q_{i,j}^{(1)}$ representative of the quality level associated with M regions making up the first image, said regions being centered on M measurement points, a step determining M measurements $q_{i,j}^{(2)}$ representative of the quality level associated with M regions making up the second image, said measurements being centered on M measurement points, the M measurements of the second image corresponding to the M measurements of the first image by the fact that the M measurement points of the second image correspond to the M measurement points of the first image, said method being **characterized in that** it comprises:

   - a step for merging (505) the quality measurements $q_{i,j}^{(1)}$, $q_{i,j}^{(2)}$, M merged measurements $q_{i,j}^{(f)}$ (506) being obtained by the combination of two corresponding measurements belonging to the two images;
   - a step for selecting (507) the N regions (508) exhibiting the N highest quality levels;
   - a step (509) of encoding the two images by using the N selected regions so as to obtain a binary code (510, 511) for each image;
   - a step for comparing (311) the two binary codes (309, 310) so as to quantify the level (312) of similarity between the two images.

2. Method according to Claim 1, **characterized in that** the two images (500, 501) are segmented and normalized.

3. Method according to any one of the preceding claims, **characterized in that** the measurement points (402, 403) are distributed uniformly over the iris images.

4. Method according to any one of the preceding claims, **characterized in that** a merged measurement $q_{i,j}^{(f)}$ associated with a given region is determined by selecting one of the measured values $q_{i,j}^{(1)}$, $q_{i,j}^{(2)}$ associated with that same region, the value corresponding to the lowest quality level being chosen.

5. Method according to any one of Claims 1 to 3, **characterized in that** a merged measurement $q_{i,j}^{(f)}$ associated with a given region is determined by weighting the measurements of the two images $q_{i,j}^{(1)}$ and $q_{i,j}^{(2)}$ corresponding to that region.

6. Method according to any one of claims 1 to 3, **characterized in that** a merged measurement $q_{i,j}^{(f)}$ associated with a given region is determined by using the following expression: $q_{i,j}^{(f)} = \sqrt{q_{i,j}^{(1)} \times q_{i,j}^{(2)}}$ .

7. Method according to any one of the preceding claims, **characterized in that** the quality measurements $\tilde{q}_{i,j}^{(1)}$ are stored in a matrix Q1, the quality measurements $q_{i,j}^{(2)}$ are stored in a matrix Q2, and the merged measurements $q_{i,j}^{(f)}$ are stored in a matrix Qf.

8. Method according to any one of the preceding claims, **characterized in that** the binary codes are obtained by applying a phase demodulation around N points of application corresponding to the center of the N selected regions.

9. Method according to any one of the preceding claims, **characterized in that** the comparison step (311) determines a similarity score (312) corresponding to the Hamming distance between the two binary codes (309, 310).

**10.** Method according to any one of the preceding claims, **characterized in that** the result of a measurement is a real number between 0 and 1, the value 1 being reached for a maximum quality of the measured region.

**11.** Method according to any one of Claims 2 to 10, **characterized in that** the merging (505), selection (507) and encoding (509) steps are applied for a number of translated versions of the normalized iris images.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5291560 A

- EP 08788209 A

**Littérature non-brevet citée dans la description**

- **L. MASEK.** *Recognition of Human Iris Patterns for Biometric Identification,* 2003
- **Y. CHEN et al.** Localized Iris Image Quality Using 2-D Wavelets. *proceeding of international conference on biometrics,* 2006
- **E. KRICHEN ; S. GARCIA-SALICETTI ; B. DORIZZI.** A new probalistic Iris Quality Measure for comprehensive noise detection. *IEEE First International Conference on Biometrics : Theory, Applications and Systems, Washington USA,* Septembre 2007

- **F. ALONSO-FERNANDEZ et al.** Iris recognition based on SIFTfeatures. *IEEE INTERNATIONAL CONFERENCE ON BIOMETRICS, IDENTITY AND SECURITY (BIDS),* 22 Septembre 2009
- An Application of Random and Hammersley Sampling Methods to Iris Recognition. **L.E. GARZA CASTANON et al.** ADVANCES IN APPLIED ARTIFICIAL INTELLIGENCE. SPRINGER, Janvier 2006
- Iris Recognition Based on Location of Key Points. **W. YANG et al.** LECTURE NOTES IN COMPUTER SCIENCE, BIOMETRIC AUTHENTICATION. SPRINGER-VERLAG, Juillet 2004